(19) Europäisches Patentamt
European Patent Office
Office européen des brevets

(11) **EP 2 058 486 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(51) Int Cl.:
*F02B 37/013* (2006.01)    *F02B 37/16* (2006.01)
*F02B 37/24* (2006.01)

(21) Anmeldenummer: **07120260.0**

(22) Anmeldetag: **08.11.2007**

(54) **Aufgeladene Brennkraftmaschine und Verfahren zum Betreiben einer derartigen Brennkraftmaschine**

Charged combustion engine and method for operating such a combustion engine

Moteur à combustion interne suralimenté et procédé de fonctionnement d'un tel moteur à combustion interne

(84) Benannte Vertragsstaaten:
**DE FR GB**

(43) Veröffentlichungstag der Anmeldung:
**13.05.2009 Patentblatt 2009/20**

(73) Patentinhaber: **Ford Global Technologies, LLC**
**Dearborn, MI 48126 (US)**

(72) Erfinder:
• **Spaeder, Uwe**
**52072, Aachen (DE)**
• **Smiljanovski, Vanco**
**50181, Bedburg (DE)**

• **Schorn, Norbert**
**52080, Aachen (DE)**
• **Kindl, Helmut**
**52066, Aachen (DE)**
• **Stalman, Rob**
**52538, Selfkant (DE)**

(74) Vertreter: **Dörfler, Thomas**
**Henry-Ford-Strasse 1**
**50725 Köln (DE)**

(56) Entgegenhaltungen:
EP-A- 1 619 366     EP-A- 1 777 387
DE-A1- 10 327 150   GB-A- 1 020 942
US-A- 5 025 629     US-A1- 2007 204 615

**Beschreibung**

Die Erfindung betrifft eine aufgeladene Brennkraftmaschine mit mindestens zwei Zylindern, die in der Art konfiguriert sind, dass sie zwei Gruppen mit jeweils mindestens einem Zylinder bilden, wobei beide Zylindergruppen jeweils mit einer Abgasleitung ausgestattet sind und beide Abgasleitungen miteinander in Verbindung stehen, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist, wobei eine Bypaßleitung zur Umgehung des ersten Verdichters vorgesehen ist, die stromabwärts des ersten Verdichters in die Gesamtansaugleitung mündet.

Des weiteren betrifft die Erfindung ein Verfahren zum Betreiben einer aufgeladenen Brennkraftmaschine der oben genannten Art.

Im Rahmen der vorliegenden Erfindung umfaßt der Begriff Brennkraftmaschine insbesondere Dieselmotoren, aber auch Ottomotoren und Hybrid-Brennkraftmaschinen.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Die Aufladung ist daher ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der spezifischen Leistung. Bei gleichen Fahrzeugrandbedingungen läßt sich so das Lastkollektiv zu niedrigeren spezifischen Verbräuchen hin verschieben.

Die Aufladung unterstützt folglich das ständige Bemühen in der Entwicklung von Verbrennungsmotoren, den Kraftstoffverbrauch zu minimieren, d. h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen.

Weitere Ziele bei der Entwicklung von aufgeladenen Brennkraftmaschinen sind die Verbesserung des Ansprechverhaltens beim instationären Betrieb der Brennkraftmaschine und die Verbesserung der Drehmomentcharakteristik im unteren Drehzahlbereich.

Nach dem Stand der Technik wird nämlich ein spürbarer Drehmomentabfall bei Unterschreiten einer bestimmten Drehzahl beobachtet. Dieser Effekt ist unerwünscht und zählt zu den gravierendsten Nachteilen der Abgasturboaufladung.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, dass zur Verbesserung der Drehmomentcharakteristik mehrere Turbolader eingesetzt werden. Eine derartige Brennkraftmaschine mit mindestens zwei Abgasturboladern ist auch Gegenstand der vorliegenden Erfindung.

Die mindestens zwei Zylinder dieser Brennkraftmaschine werden in zwei Zylindergruppen, die jeweils mit einer Abgasleitung ausgestattet sind, aufgeteilt. Die beiden Turbinen sind parallel geschaltet, wobei die erste Turbine des ersten Abgasturboladers in der Abgasleitung der ersten Zylindergruppe und die zweite Turbine des zweiten Abgasturboladers in der Abgasleitung der zweiten Zylindergruppe angeordnet wird. Die Abgasleitungen der beiden Zylindergruppen sind miteinander verbunden, so dass mittels Regeleinrichtungen - beispielsweise einem Absperrelement oder einer variablen Turbinengeometrie - eine beliebige Aufteilung der abzuführenden Abgasmenge auf die beiden Turbinen erfolgen kann. Insbesondere kann das gesamte Abgas nur durch eine der beiden Turbinen geführt werden.

Die beiden Verdichter hingegen werden in Reihe geschaltet, wobei der erste Verdichter des ersten Abgasturboladers in der Gesamtansaugleitung, die zur Versorgung der Brennkraftmaschine mit Frischluft bzw. Frischgemisch dient, und der zweite Verdichter des zweiten Abgasturboladers stromabwärts des ersten Verdichters in der Gesamtansaugleitung angeordnet wird. Eine Bypaßleitung zur Umgehung des ersten Verdichters ist vorgesehen und mündet stromabwärts des ersten Verdichters in die Gesamtansaugleitung.

Die in dieser Weise angeordneten Abgasturbolader gestatten es, die parallel betriebenen Turbinen auf kleinere Abgasströme auszulegen und damit auf das effektive Verdichterkennfeld in vorteilhafter Weise Einfluß zu nehmen. Das effektive Verdichterkennfeld wird aufgrund der Reihenschaltung d. h. der mehrstufigen Verdichtung aufgeweitet. Insbesondere wird ein Verschieben der Pumpgrenze zu kleineren Verdichterströmen hin möglich, wodurch auch bei kleinen Verdichterströmen hohe Ladedruckverhältnisse erzielt werden können, was im unteren Teillastbereich die Drehmomentcharakteristik deutlich verbessert.

Der erste Verdichter d. h. der Verdichter der Niederdruckstufe ist dabei größer dimensioniert als der zweite Verdichter d. h. der Verdichter der Hochdruckstufe, der entweder einen bereits im ersten Verdichter vorverdichteten größeren Luftmassenstrom im Rahmen einer zweistufigen Verdichtung nochmals komprimiert oder aber kleinere nicht vorverdichtete Luftmassenströme komprimiert.

Der zweite kleinere Abgasturbolader bzw. der zweite kleinere Verdichter wird unter sämtlichen Betriebsbedingungen der Brennkraftmaschine durchströmt und insbesondere zur Versorgung der Brennkraftmaschine mit Frischluft bei niedrigen Drehzahlen bzw. kleinen Abgasmengen eingesetzt, wobei eine Bypaßleitung zur Umgehung des ersten Verdichters vorgesehen ist, die stromabwärts des ersten Verdichters in die Gesamtansaugleitung mündet, so dass die Frischluft dem zweiten Verdichter direkt und folglich nicht vorverdichtet zugeführt wird.

Da der erste Verdichter bei niedrigen Drehzahlen - wie ausgeführt - nicht zur Verdichtung der Ladeluft herangezogen wird, also folglich keine Abgasenergie zum Antrieb dieses Verdichters benötigt wird, ist es nicht erforderlich und sinnvoll, Abgas durch die erste Turbine zu führen. Aus diesem Grund wird das gesamte Abgas mittels Regeleinrichtung durch die zweite Turbine der Hochdruckstufe geführt. Hierzu kann beispielsweise ein Absperrelement stromaufwärts der ersten Turbine angeordnet und verschlossen werden.

Bei höheren Drehzahlen bzw. größeren Abgasmengen wird die Bypaßleitung mittels Absperrelement verschlossen und die Frischluft im Rahmen einer zweistufigen Verdichtung zunächst durch den ersten Verdichter und anschließend durch den zweiten Verdichter hindurchgeführt. Das Abgas kann beliebig auf die beiden Turbinen aufgeteilt werden.

Kleiner dimensionierte Abgasturbolader im allgemeinen und kleiner dimensionierte Verdichter bzw. Turbinen im besonderen bieten - wegen ihrer geringeren Masse und ihrem geringeren Massenträgheitsmoment - eine Vielzahl von Vorteilen.

Kleinere Turbinen bzw. kleinere Verdichter sind weniger träge als größere Turbinen bzw. größere Verdichter, weil das Laufzeug sich schneller beschleunigen und verzögern läßt. Das Ansprechverhalten der Brennkraftmaschine verbessert sich. Vor allem weist der zweite Abgasturbolader, dessen Verdichter aufgrund der Vorverdichtung der Verbrennungsluft kleiner ausgeführt werden kann, ein deutlich kleineres Massenträgheitsmoment auf.

Des weiteren weisen kleinere Aggregate ein geringeres Gewicht auf und ein kleineres Bauvolumen, wodurch ein dichteres Packaging im Motorraum ermöglicht wird, insbesondere die gewünschte motornahe Anordnung der Turbine.

Die Anordnung der Abgasturbolader bei der in Rede stehenden Art von Brennkraftmaschine bzw. das Verfahren zum Betrieb einer derartigen Brennkraftmaschine führen dazu, dass der erste Verdichter große Luftmassenströme bei vergleichsweise niedrigen Druckverhältnissen fördert bzw. bereitstellt, wozu eine vergleichsweise geringe Antriebsleistung erforderlich ist.

Nach dem Stand der Technik wird sowohl der Verdichter als auch die Turbine der Niederdruckstufe in Radialbauweise ausgeführt d. h. die Anströmung der Laufschaufeln bei der Turbine und das Abströmen aus den Laufschaufeln heraus beim Verdichter erfolgt radial. Der Geschwindigkeitsvektor der Strömung schneidet die Welle bzw. Achse des Abgasturboladers und zwar in einem rechten Winkel, falls die An- bzw. Abströmung exakt radial verläuft. Aus der EP 1777387 A1 ist eine solche Brennkraftmaschine bekannt.

Die herkömmliche Radialbauweise führt unter den oben genannten Betriebsbedingungen des ersten Verdichters, nämlich der Verdichtung großer Luftmassenströme bei vergleichsweise niedrigen Druckverhältnissen, zu einem nicht zufriedenstellenden Wirkungsgrad der Niederdruckstufe.

Es wird daher angestrebt, den Wirkungsgrad des ersten Verdichters zu erhöhen und einen möglichst hohen Gesamtwirkungsgrad der Niederdruckstufe zu erzielen.

Vor diesem Hintergrund ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und bei der insbesondere der erste Verdichter bzw. der erste Abgasturbolader einen höheren Wirkungsgrad aufweist.

Eine weitere Teilaufgabe der vorliegenden Erfindung ist es, ein Verfahren zum Betreiben einer aufgeladenen Brennkraftmaschine der oben genannten Art aufzuzeigen.

Gelöst wird die erste Teilaufgabe durch eine aufgeladene Brennkraftmaschine mit mindestens zwei Zylindern, die in der Art konfiguriert sind, dass sie zwei Gruppen mit jeweils mindestens einem Zylinder bilden, wobei beide Zylindergruppen jeweils mit einer Abgasleitung ausgestattet sind und beide Abgasleitungen miteinander in Verbindung stehen, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist, wobei eine Bypaßleitung zur Umgehung des ersten Verdichters vorgesehen ist, die stromabwärts des ersten Verdichters in die Gesamtansaugleitung mündet, und die dadurch gekennzeichnet ist, dass der erste Verdichter des ersten Abgasturboladers ein Axialverdichter bzw. ein Mixed-Flow-Verdichter ist.

Als Axialverdichter werden im Rahmen der vorliegenden Erfindung Verdichter bezeichnet, bei denen das Abströmen aus den Laufradschaufeln heraus axial erfolgt. Der Geschwindigkeitsvektor der Abströmung im Bereich des Laufrades verläuft dabei parallel zur Welle bzw. Achse des Abgasturboladers. Bei sogenannten Mixed-Flow-Verdichtern weist der Geschwindigkeitsvektor der Abströmung neben der axialen Geschwindigkeitskomponente auch eine radiale Komponente auf.

Beiden Verdichterarten ist also gemeinsam, dass sie eine axiale Geschwindigkeitskomponente aufweisen, weshalb im Zusammenhang mit beiden Ausführungsformen im folgenden auch von "Axialbauweise" die Rede sein wird. Vorteilhaft sind Ausführungsformen des Mixed-Flow-Verdichters, bei denen die axiale Geschwindigkeitskomponente größer ist als die radiale Komponente.

Der Verdichtertyp der erfindungsgemäßen Brennkraftmaschine verfügt über einen verbesserten Wirkungsgrad unter den vorliegenden bzw. hier relevanten Betriebsbedingungen und zeichnet sich gegenüber den herkömmlichen Radialverdichtern insbesondere durch die geringeren realisierbaren Druckverhältnisse aus.

Bei einer Auslegung der Aufladung, bei der der zweite Verdichter die Brennkraftmaschine im Rahmen einer einstufigen Kompression bis zu einer Drehzahl von 75% der maximalen Drehzahl mit Frischluft versorgen soll, wäre für die Niederdruckstufe bereits ein Kompressionsverhältnis von 1,4 ausreichend.

Dadurch wird die erste der Erfindung zugrunde liegende Aufgabe gelöst, nämlich eine aufgeladene Brennkraftmaschine bereitzustellen, mit der die nach dem Stand der Technik bekannten Nachteile überwunden werden und bei der insbesondere der erste Verdichter bzw. der erste Abgasturbolader einen höheren Wirkungsgrad aufweist.

Hinsichtlich einer weiteren Optimierung des Wirkungsgrades sind insbesondere Ausführungsformen vorteilhaft, bei denen der erste Verdichter ein mehrstufiger Verdichter ist.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen die erste Turbine des ersten Abgasturboladers eine Axialturbine bzw. Mixed-Flow-Turbine ist. Dies gestattet eine Anpassung der Laufraddurchmesser von Turbine und Verdichter unter Beibehaltung der spezifischen Strömungscharakteristik der Turbine; beispielsweise des Druckverhältnisses und der Durchflußkapazität.

Die Anpassung der beiden Laufraddurchmesser führt zu einem Betrieb der Turbine bei verbessertem Wirkungsgrad und damit zu einem erhöhten Gesamtwirkungsgrad des Abgasturboladers der Niederdruckstufe.

Die konstruktiven Parameter der Turbine, nämlich die Schaufelhöhe der Laufradschaufeln, der Außendurchmesser d. h. der Durchmesser des Laufrades am äußeren Umfang der Schaufeln, sowie der Innendruckmesser d. h. der Durchmesser des Laufrades an der Verbindungsstelle von Schaufel und Welle, können entsprechend den jeweils vorliegenden Gegebenheiten wie Abgasmassenstrom und Druckverhältnis einerseits und dem Laufraddurchmesser des Verdichters andererseits gewählt werden.

Axialturbinen bzw. Mixed-Flow-Turbinen weisen gegenüber Radialturbinen weitere Vorteile auf, die sich insbesondere bei der Verwendung mit einer Brennkraftmaschine günstig auswirken. So führt der Einsatz dieser Turbinen zu einem verbesserten Ansprechverhalten bzw. einer verbesserten Beschleunigung, insbesondere aufgrund des geringeren Trägheitsmomentes.

Grundsätzlich kann die erste Turbine aber auch in Radialbauweise ausgeführt werden.

Vorteilhaft sind Ausführungsformen der Brennkraftmaschine, bei denen der erste Verdichter größer ausgelegt ist als der zweite Verdichter, da bei der erfindungsgemäßen Brennkraftmaschine der erste Verdichter im Rahmen der zweistufigen Verdichtung die Niederdruckstufe bildet, wohingegen der zweite Verdichter die bereits vorverdichtete Luft komprimiert und somit die Hochdruckstufe darstellt.

Vorteilhaft sind Ausführungsformen der Brennkraftmaschine, bei denen in der Bypaßleitung ein Absperrelement vorgesehen ist.

Die Bypaßleitung gestattet es, den zweiten Verdichter bei Umgehung des ersten Verdichters direkt mit Frischluft zu beaufschlagen, was insbesondere bei niedrigen Drehzahlen bzw. geringen Ladeluftmengen vorgenommen wird, wenn der zweite Verdichter die Brennkraftmaschine im Rahmen einer einstufigen Verdichtung mit Frischluft versorgt. Dabei kann die Bypaßleitung stromaufwärts des ersten Verdichters aus der Gesamtansaugleitung abzweigen.

Bei höheren Drehzahlen wird eine zweistufige Verdichtung der Ladeluft bevorzugt. Um zu verhindern, dass der erste Verdichter bei höheren Drehzahlen, wenn die Frischluft beide Verdichter durchströmt, in die Bypaßleitung hinein fördert und Frischluft abgeblasen wird, ist ein Absperrelement in der ersten Bypaßleitung vorgesehen. Ein geschlossenes Absperrelement verhindert auch, dass vom zweiten Verdichter Frischluft direkt via Bypaßleitung angesaugt wird und stellt auf diese Weise die zweistufige Verdichtung sicher.

Vorteilhaft sind Ausführungsformen, bei denen das Absperrelement ein Ventil ist, wobei das Absperrelement vorzugsweise elektrisch, hydraulisch, pneumatisch, mechanisch oder magnetisch steuerbar ist, vorzugsweise mittels Motorsteuerung.

Vorteilhaft sind Ausführungsformen der Brennkraftmaschine, bei denen zwischen den beiden Verdichtern stromaufwärts der Einmündung der Bypaßleitung ein Absperrelement in der Gesamtansaugleitung vorgesehen ist.

Dieses Absperrelement verhindert im geschlossenen Zustand, dass der zweite Verdichter bei niedrigen Drehzahlen, wenn die Frischluft über die Bypaßleitung angesaugt werden soll, Ladeluft über den ersten Verdichter ansaugt. Das ungewollte Ansaugen von Ladeluft über den ersten Verdichter würde zu einer Kontamination der Ladeluft mit Öl führen, das zur Schmierung der beweglichen Teile des Verdichters bereitgestellt wird.

Vorteilhaft sind Ausführungsformen der Brennkraftmaschine, bei denen eine Abgasrückführung (AGR) vorgesehen ist, welche eine Leitung umfaßt, die stromaufwärts einer der beiden Turbinen aus der dieser Turbine zugeordneten Abgasleitung abzweigt und in die Gesamtansaugleitung mündet. Diese Ausführungsform der Abgasrückführung kann auch als Hochdruck-AGR bezeichnet werden, da der Abgasdruck in den Abgasleitungen stromaufwärts der Turbinen hoch ist, insbesondere im Vergleich zu dem niedrigen in den Abgasleitungen stromabwärts der Turbinen vorherrschenden Abgasdruck.

Um zukünftige Grenzwerte für Schadstoffemissionen einzuhalten, sind neben einer Aufladung der Brennkraftmaschine und der Nachbehandlung der Abgase weitere Maßnahmen erforderlich.

Dabei ist die Reduzierung der Stickoxidemissionen, insbesondere bei Dieselmotoren, von hoher Relevanz. Da die Bildung der Stickoxide nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung d. h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $X_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $X_{AGR} \approx 60\%$ bis 70% liegen können.

Neben der bereits erwähnten Hochdruck-AGR kann - alternativ oder zusätzlich - eine sogenannte Niederdruck-AGR vorgesehen werden bzw. vorteilhaft sein d. h. eine Ausführungsform der Brennkraftmaschine, bei der eine Abgasrückführung vorgesehen ist, welche eine Leitung umfaßt, die stromabwärts der Turbine bzw. der Turbinen aus der Abgasleitung abzweigt und in die Gesamtansaugleitung einmündet. Hierzu werden die Abgasleitungen der Turbinen vorzugsweise zu einer Gesamtabgasleitung zusammengeführt, aus der die Rückführleitung dann abzweigt, damit unter sämtlichen Betriebsbedingungen der Brennkraftmaschine hohe Rückführraten realisiert werden können.

Vorteilhaft sind Ausführungsformen der Brennkraftmaschine, bei denen die erste Turbine eine feste, nicht veränderbare Turbinengeometrie aufweist. Im Gegensatz zu einer Turbine mit variabler Geometrie (VTG) entfällt hier prinzipbedingt eine Steuerung. Diese Ausführungsform weist insbesondere Kostenvorteile auf.

Vorteilhaft sind Ausführungsformen der Brennkraftmaschine, bei denen der erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Es wird angemerkt, dass sowohl die Verdichter als auch die Turbinen grundsätzlich eine feste, nicht veränderbare Geometrie oder eine variable Geometrie aufweisen. aber auch in der Waste-Gate-Bauweise ausgeführt werden können.

Vorteilhaft sind Ausführungsformen der Brennkraftmaschine, bei denen stromabwärts der Verdichter ein Ladeluftkühler in der Gesamtansaugleitung angeordnet ist. Der Ladeluftkühler senkt die Lufttemperatur und steigert damit die Dichte der Luft, wodurch auch der Kühler zu einer besseren Füllung des Brennraums mit Luft d. h. zu einer größeren Luftmasse beiträgt.

Vorteilhaft sind Ausführungsformen der Brennkraftmaschine, bei denen die Leitung zur Abgasrückführung stromabwärts des Ladeluftkühler in die Gesamtansaugleitung mündet. Auf diese Weise wird der Abgasstrom nicht durch den Ladeluftkühler geführt und kann folglich diesen Kühler nicht durch Ablagerungen von im Abgasstrom enthaltenen Schadstoffen, insbesondere Rußpartikeln und Öl, verschmutzen.

Vorteilhaft sind Ausführungsformen der Brennkraftmaschine, bei denen in der Leitung zur Abgasrückführung ein zusätzlicher Kühler vorgesehen ist. Dieser zusätzliche Kühler senkt die Temperatur im heißen Abgasstrom und steigert damit die Dichte der Abgase. Die Temperatur der Zylinderfrischladung, die sich bei der Mischung der Frischluft mit dem rückgeführte Abgasen einstellt, wird hierdurch folglich weiter gesenkt, wodurch auch der zusätzliche Kühler zu einer besseren Füllung des Brennraums mit Frischgemisch beiträgt.

Vorteilhaft sind Ausführungsformen der Brennkraftmaschine, bei denen in der Leitung zur Abgasrückführung ein Absperrelement vorgesehen ist. Dieses Absperrelement dient der Steuerung der Abgasrückführrate.

Vorteilhaft sind Ausführungsformen der Brennkraftmaschine, bei denen zwischen den beiden Verdichtern ein Zwischenkühler in der Gesamtansaugleitung vorgesehen ist. Vorzugsweise ist dieser Zwischenkühler stromaufwärts der Einmündung der Bypaßleitung angeordnet, damit die via Bypaßleitung angesaugte Frischluft den Zwischenkühler nicht durchläuft, bevor sie dem zweiten Verdichter zugeführt wird. Dies könnte im Rahmen der einstufigen Verdichtung zu einer unerwünschten Erwärmung der angesaugten Ladeluft führen.

Der Zwischenkühler senkt die Temperatur und die Dichte der Ladeluft und verkleinert - gleichgroße Massenströme vorausgesetzt - den Volumenstrom durch den zweiten Verdichter. Folglich kann der zweite Verdichter kleiner dimensioniert werden, was zu den bereits oben genannten Vorteilen führt.

Die zweite der Erfindung zugrunde liegende Teilaufgabe wird gelöst durch ein Verfahren zum Betreiben einer aufgeladenen Brennkraftmaschine der zuvor beschriebenen Art, welche in der Bypaßleitung mit einem Absperrelement ausgestattet ist, bei dem zur Versorgung der Brennkraftmaschine mit Frischluft

■ bei niedrigen Drehzahlen bzw. kleinen Ladeluftmengen das in der Bypaßleitung vorgesehene Absperrelement geöffnet wird, so dass die Frischluft bei Umgehung des ersten Verdichters via Bypaßleitung direkt dem zweiten Verdichter zugeführt wird, und

■ bei höheren Drehzahlen bzw. größeren Ladeluftmengen das in der Bypaßleitung vorgesehene Absperrelement verschlossen wird, so dass die Frischluft zunächst dem ersten Verdichter und anschließend dem zweiten Verdichter zugeführt wird.

Das im Zusammenhang mit der erfindungsgemäßen Brennkraftmaschine Gesagte gilt ebenfalls für das erfindungsgemäße Verfahren.

Zum Betreiben einer aufgeladenen Brennkraftmaschine, bei der zwischen den beiden Verdichtern stromaufwärts der Einmündung der Bypaßleitung ein Absperrelement in der Gesamtansaugleitung vorgesehen ist, sind Ausführungsformen des Verfahrens vorteilhaft, bei denen

■ bei niedrigen Drehzahlen bzw. kleinen Ladeluftmengen das in der Gesamtansaugleitung vorgesehene Absperrelement verschlossen wird, und
■ bei höheren Drehzahlen bzw. größeren Ladeluftmengen das in der Gesamtansaugleitung vorgesehene Absperrelement geöffnet wird.

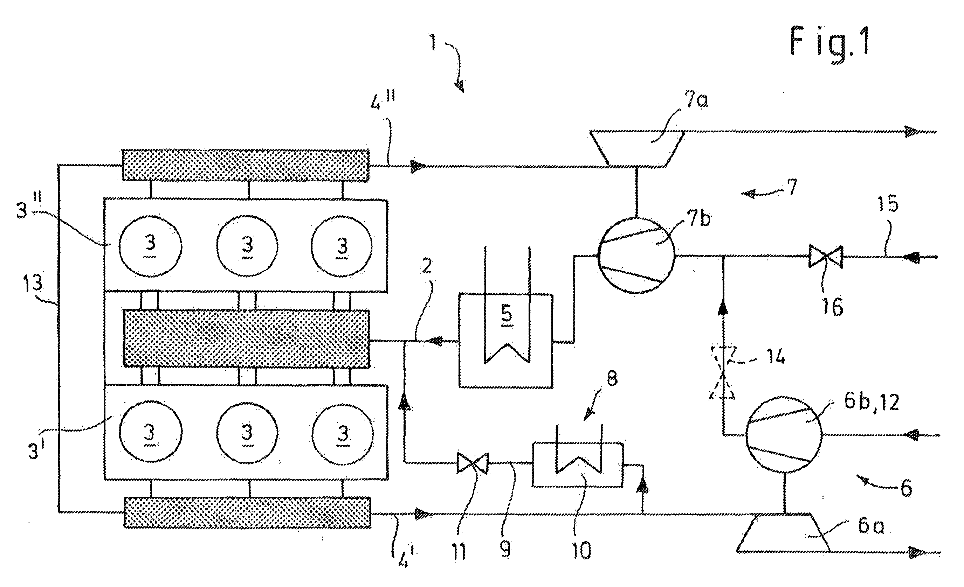

Im folgenden wird die Erfindung gemäß der Figur 1 näher beschrieben. Hierbei zeigt:

Fig. 1     schematisch eine Ausführungsform der Brennkraftmaschine.

Figur 1 zeigt eine Ausführungsform der aufgeladenen Brennkraftmaschine 1 am Beispiel eines Sechs-Zylinder-V-Motors. Die Zylinder 3 der Brennkraftmaschine 1 sind in zwei Zylindergruppen 3', 3" aufgeteilt, die jeweils über eine Abgasleitung 4', 4" verfügen, wobei eine Verbindungsleitung 13 vorgesehen ist, durch die die beiden Abgasleitungen 4', 4" miteinander kommunizieren.

Es sind zwei Abgasturbolader 6, 7 vorgesehen, wobei die erste Turbine 6a des ersten Abgasturboladers 6 in der ersten Abgasleitung 4' der ersten Zylindergruppe 3' und die zweite Turbine 7a des zweiten Abgasturboladers 7 in der zweiten Abgasleitung 4" der zweiten Zylindergruppe 3" angeordnet ist, so dass die beiden Turbinen 6a, 7a parallel angeordnet sind.

Die diesen beiden Turbinen 6a, 7a zugeordneten Verdichter 6b, 7b sind in einer gemeinsamen Gesamtansaugleitung 2 angeordnet, wobei der zweite Verdichter 7b des zweiten Abgasturboladers 7 stromabwärts des ersten Verdichters 6b des ersten Abgasturboladers 6 angeordnet ist. Damit verfügt die Brennkraftmaschine 1 über zwei in Reihe geschaltete bzw. angeordnete Verdichter 6b, 7b, wodurch eine zweistufige Aufladung vorgenommen werden kann.

Der erste Verdichter 6b ist größer ausgelegt als der zweite Verdichter 7b, da der erste Verdichter 6b die Niederdruckstufe der zweistufigen Verdichtung bildet, wohingegen der zweite Verdichter 7b die bereits vorverdichtete Luft komprimiert und somit die kleiner auszulegende Hochdruckstufe darstellt.

Stromabwärts der Verdichter 6b, 7b ist ein Ladeluftkühler 5 in der Gesamtansaugleitung 2, die zur Versorgung der Brennkraftmaschine 1 mit Frischluft bzw. Frischgemisch dient, angeordnet. Der Ladeluftkühler 5 senkt die Lufttemperatur und steigert damit die Dichte der Luft, wodurch er zu einer besseren Füllung der Zylinder 3 mit Luft beiträgt.

Die Brennkraftmaschine 1 ist des weiteren mit einer Abgasrückführung 8 ausgestattet. Hierzu zweigt eine Leitung 9 stromaufwärts der ersten Turbine 6a aus der ersten Abgasleitung 4' ab und mündet in die Gesamtansaugleitung 2. Dabei mündet die Leitung 9 zur Abgasrückführung 8 stromabwärts des Ladeluftkühlers 5 in die Gesamtansaugleitung 2. Auf diese Weise wird der Abgasstrom nicht durch den Ladeluftkühler 5 geführt und kann diesen Kühler 5 nicht verschmutzen.

In der Leitung 9 zur Abgasrückrührung ist ein zusätzlicher Kühler 10 vorgesehen, der die Temperatur des heißen Abgasstromes senkt. Ebenfalls in der Leitung 9 ist zur Steuerung der Abgasrückführrate ein Absperrelement 11 angeordnet.

Grundsätzlich kann die Leitung 9 zur Abgasrückführung 8 auch von der zweiten Abgasleitung 4" bzw. an jeder beliebigen Stelle zwischen den Turbinen 6a, 7a abzweigen, da die beiden Abgasleitungen 4', 4" der beiden Zylindergruppen 3', 3" über die Verbindungsleitung 13 miteinander kommunizieren, so dass das gesamte Abgas sowohl durch die erste Abgasleitung 4' bzw. erste Turbine 6a als auch durch die zweite Abgasleitung 4" bzw. zweite Turbine 7a geführt werden kann. Zur Steuerung d. h. Aufteilung des Abgasmassenstroms kann in den Abgasleitungen 4', 4" ein Absperrelement als Regeleinrichtung vorgesehen werden.

Wie bereits erwähnt kann alternativ oder zusätzlich eine Niederdruck-AGR vorgesehen werden, bei der die Leitung zur Rückführung des Abgases stromabwärts der Turbinen 6a, 7a aus dem Abgassystem abzweigt.

Die in Figur 1 dargestellte Ausführungsform verfügt über eine Bypaßleitung 15, die es dem zweiten Verdichter 7b gestattet, bei Umgehung des ersten Verdichters 6b Frischluft aus der Umgebung anzusaugen. In der Bypaßleitung 15 ist ein Absperrelement 16 vorgesehen, um die Bypaßleitung 15 zu öffnen bzw. zu versperren.

Ein weiteres Absperrelement 14 (gestrichelt dargestellt) kann in der Gesamtansaugleitung 2 zwischen den beiden Verdichtern 6b, 7b angeordnet werden, um den Frischluftstrom durch den ersten Verdichter 6b vollständig zu unterbinden, während der zweite Verdichter 7b Frischluft über die Bypaßleitung 15 ansaugt.

Der Verdichter 6b der Niederdruckstufe ist ein Axialverdichter 12 bzw. Mixed-Flow-Verdichter 12.

### Bezugszeichen

| | |
|---|---|
| 1 | aufgeladene Brennkraftmaschine |
| 2 | Gesamtansaugleitung |
| 3 | Zylinder |
| 3' | erste Zylindergruppe |
| 3" | zweite Zylindergruppe |
| 4' | erste Abgasleitung |
| 4" | zweite Abgasleitung |
| 5 | Ladeluftkühler |
| 6 | erster Abgasturbolader |
| 6a | erste Turbine |
| 6b | erster Verdichter |
| 7 | zweiter Abgasturbolader |
| 7a | zweite Turbine |
| 7b | zweiter Verdichter |
| 8 | Abgasrückführung |
| 9 | Leitung zur Abgasrückführung |
| 10 | Kühler |
| 11 | Absperrelement |
| 12 | Axialverdichter, Mixed-Flow-Verdichter |
| 13 | Verbindungsleitung |
| 14 | Absperrelement |
| 15 | Bypaßleitung |
| 16 | Absperrelement |
| AGR | Abgasrückführung |
| $m_{AGR}$ | Masse an zurückgeführtem Abgas |
| $m_{Frischluft}$ | Masse an zugeführter Frischluft bzw. Verbrennungsluft |
| $X_{AGR}$ | Abgasrückführrate |

### Patentansprüche

**1.** Aufgeladene Brennkraftmaschine (1) mit mindestens zwei Zylindern (3), die in der Art konfiguriert sind, dass sie zwei Gruppen (3', 3") mit jeweils mindestens einem Zylinder (3) bilden, wobei beide Zylindergruppen (3', 3") jeweils mit einer Abgasleitung (4', 4") ausgestattet sind und beide Abgasleitungen (4', 4") miteinander in Verbindung (13) stehen, und mit zwei Abgasturboladern (6, 7), deren Turbinen (6a, 7a) parallel geschaltet sind, indem eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist, und deren Verdichter (6b, 7b) in Reihe geschaltet sind, indem ein erster Verdichter (6b) des ersten Abgasturboladers (6) in einer Gesamtansaugleitung (2), die zur Versorgung der Brennkraftmaschine (1) mit Frischluft bzw. Frischgemisch dient, angeordnet ist und ein zweiter Verdichter (7b) des zweiten Abgasturboladers (7) stromabwärts des ersten Verdichters (6b) in dieser Gesamtansaugleitung (2) angeordnet ist, wobei eine Bypaßleitung (15) zur Umgehung des ersten Verdichters (6b) vorgesehen ist, die stromabwärts des ersten Verdichters (6b) in die Gesamtansaugleitung (2) mündet, **dadurch gekennzeichnet, dass** der erste Verdichter (6b) des ersten Abgasturboladers (6) ein Axialverdichter (12) bzw. ein Mixed-Flow-Verdichter (12) ist.

**2.** Aufgeladene Brennkraftmaschine (1) nach Anspruch 1, **dadurch gekennzeichnet, dass** der erste Verdichter (6b) ein mehrstufiger Verdichter ist.

**3.** Aufgeladene Brennkraftmaschine (1) nach Anspruch 1 oder 2, **dadurch gekennzeichnet, dass** die erste Turbine (6a) des ersten Abgasturboladers (6) eine Axialturbine bzw. Mixed-Flow-Turbine ist.

**4.** Aufgeladene Brennkraftmaschine (1) nach einem der vorherigen Ansprüche, **dadurch gekennzeichnet, dass** in der Bypaßleitung (15) ein Absperrelement (16) vorgesehen ist.

**5.** Aufgeladene Brennkraftmaschine (1) nach einem der vorherigen Ansprüche, **dadurch gekennzeichnet, dass** zwischen den beiden Verdichtern (6b, 7b) stromaufwärts der Einmündung der Bypaßleitung (15) ein Absperrelement (14) in der Gesamtansaugleitung (2) vorgesehen ist.

**6.** Aufgeladene Brennkraftmaschine (1) nach einem der vorherigen Ansprüche, **dadurch gekennzeichnet, dass** eine Abgasrückführung (8) vorgesehen ist, welche eine Leitung (9) umfaßt, die stromaufwärts einer der beiden Turbinen (6a, 7a) aus der dieser Turbine (6a, 7a) zugeordneten Abgasleitung (4', 4") abzweigt und in die Gesamtansaugleitung (2) mündet.

**7.** Aufgeladene Brennkraftmaschine (1) nach einem der vorherigen Ansprüche, **dadurch gekennzeichnet, dass** die Abgasleitungen (4', 4") der Turbinen (6a, 7a) zu einer Gesamtabgasleitung zusammenführen und eine Abgasrückführung vorgesehen ist, welche eine Leitung umfaßt, die aus dieser Gesamtabgasleitung abzweigt und in die Gesamtansaugleitung (2) mündet.

**8.** Aufgeladene Brennkraftmaschine (1) nach einem der vorherigen Ansprüche, **dadurch gekennzeichnet, dass** die erste Turbine (6a) eine variable Turbinengeometrie aufweist.

**9.** Aufgeladene Brennkraftmaschine (1) nach einem der vorherigen Ansprüche, **dadurch gekennzeichnet, dass** der erste Verdichter (6b) eine feste, nicht veränderbare Verdichtergeometrie aufweist.

**10.** Aufgeladene Brennkraftmaschine (1) nach einem der vorherigen Ansprüche, **dadurch gekennzeichnet, dass** stromabwärts der Verdichter (6b, 7b) ein Ladeluftkühler (5) in der Gesamtansaugleitung (2) angeordnet ist.

**11.** Verfahren zum Betreiben einer aufgeladenen Brennkraftmaschine (1) nach einem der Ansprüche 4 bis 10, bei dem zur Versorgung der Brennkraftmaschine (1) mit Frischluft

■ bei niedrigen Drehzahlen bzw. kleinen Ladeluftmengen das in der Bypaßleitung (15) vorgesehene Absperrelement (16) geöffnet wird, so dass die Frischluft bei Umgehung des ersten Verdichters (6b) via Bypaßleitung (15) direkt dem zweiten Verdichter (7b) zugeführt wird, und
■ bei höheren Drehzahlen bzw. größeren Ladeluftmengen das in der Bypaßleitung (15) vorgesehene Absperrelement (16) verschlossen wird, so dass die Frischluft zunächst dem ersten Verdichter (6b) und anschließend dem zweiten Verdichter (7b) zugeführt wird.

**12.** Verfahren nach Anspruch 11 zum Betreiben einer aufgeladenen Brennkraftmaschine, bei der (1) zwischen den beiden Verdichtern (6b, 7b) stromaufwärts der Einmündung der Bypaßleitung (15) ein Absperrelement (14) in der Gesamtansaugleitung (2) vorgesehen ist, bei dem

■ bei niedrigen Drehzahlen bzw. kleinen Ladeluftmengen das in der Gesamtansaugleitung (2) vorgesehene Absperrelement (14) verschlossen wird, und
■ bei höheren Drehzahlen bzw. größeren Ladeluftmengen das in der Gesamtansaugleitung (2) vorgesehene Absperrelement (14) geöffnet wird.

**Claims**

**1.** Supercharged internal combustion engine (1) with at least two cylinders (3) which are configured such that they form two groups (3', 3"), each with at least one cylinder (3), the two cylinder groups (3', 3") being equipped in each case with an exhaust gas line (4', 4"), and the two exhaust gas lines (4', 4") being connected (13) to one another, and with two exhaust gas turbochargers (6, 7), the turbines (6a, 7a) of which are connected in parallel, in that a first turbine (6a) of a first exhaust gas turbocharger (6) is arranged in the exhaust gas line (4') of the first cylinder group (3'), and a second turbine (7a) of a second exhaust gas turbocharger (7) is arranged in the exhaust gas line (4") of the second cylinder group (3"), and the compressors (6b, 7b) of which are connected in series, in that a first compressor (6b) of the first exhaust gas turbocharger (6) is arranged in an overall intake line (2), which serves for supplying the internal combustion engine (1) with fresh air or fresh mixture, and a second compressor (7b) of the second exhaust gas turbocharger (7) is arranged downstream of the first compressor (6b) in this overall intake line (2), a bypass line (15) for bypassing the first compressor (6b) being provided, which issues, downstream of the first compressor (6b), into the overall intake line (2), **characterized in that** the first compressor (6b) of the first exhaust gas turbocharger (6) is an axial compressor (12) or a mixed-flow compressor (12).

2. Supercharged internal combustion engine (1) according to Claim 1, **characterized in that** the first compressor (6b) is a multistage compressor.

3. Supercharged internal combustion engine (1) according to Claim 1 or 2, **characterized in that** the first turbine (6a) of the first exhaust gas turbocharger (6) is an axial turbine or mixed-low turbine.

4. Supercharged internal combustion engine (1) according to one of the preceding claims, **characterized in that** a shut-off element (16) is provided in the bypass line (15).

5. Supercharged internal combustion engine (1) according to one of the preceding claims, **characterized in that** a shut-off element (14) is provided, upstream of the issue of the bypass line (15), between the two compressors (6b, 7b) in the overall intake line (2).

6. Supercharged internal combustion engine (1) according to one of the preceding claims, **characterized in that** exhaust gas recirculation (8) is provided, which comprises a line (9) which branches off upstream of one of the two turbines (6a, 7a) from the exhaust gas line (4', 4'') assigned to this turbine (6a, 7a) and which issues into the overall intake line (2).

7. Supercharged internal combustion engine (1) according to one of the preceding claims, **characterized in that** the exhaust gas lines (4', 4") of the turbines (6a, 7a) are combined into an overall exhaust gas line, and exhaust gas recirculation is provided which comprises a line which branches off from this overall exhaust gas line and which issues into the overall intake line (2).

8. Supercharged internal combustion engine (1) according to one of the preceding claims, **characterized in that** the first turbine (6a) has a variable turbine geometry.

9. Supercharged internal combustion engine (1) according to one of the preceding claims, **characterized in that** the first compressor (6b) has a fixed invariable compressor geometry.

10. Supercharged internal combustion engine (1) according to one of the preceding claims, **characterized in that** a charge air cooler (5) is arranged downstream of the compressors (6b, 7b) in the overall intake line (2).

11. Method for operating a supercharged internal combustion engine (1) according to one of Claims 4 to 10, in which, to supply the internal combustion engine (1) with fresh air,

■ at low rotational speeds or in the case of low charge air quantities, the shut-off element (16) provided in the bypass line (15) is opened, so that the fresh air, bypassing the first compressor (6b), is supplied directly to the second compressor (7b) via the bypass line (15), and,
■ at higher rotational speeds or in the case of higher charge air quantities, the shut-off element (16) provided in the bypass line (15) is closed, so that the fresh air is supplied first to the first compressor (6b) and subsequently to the second compressor (7b).

12. Method according to Claim 11 for operating a supercharged internal combustion engine, in which (1) a shut-off element (14) is provided, upstream of the issue of the bypass line (15), between the two compressors (6b, 7b) in the overall intake line (2), in which method

■ at low rotational speeds or in the case of low charge air quantities, the shut-off element (14) provided in the overall intake line (2) is closed, and,
■ at higher rotational speeds or in the case of higher charge air quantities, the shut-off element (14) provided in the overall intake line (2) is opened.

**Revendications**

1. Moteur à combustion interne suralimenté (1) comportant au moins deux cylindres (3), qui sont configurés de telle manière qu'ils forment deux groupes (3', 3") avec chacun au moins un cylindre (3), dans lequel les deux groupes de cylindres (3', 3") sont chacun équipés d'une conduite de gaz d'échappement (4', 4") et les deux conduites de gaz d'échappement (4', 4") sont en communication (13) l'une avec l'autre, et avec deux turbocompresseurs à gaz d'échappement (6, 7), dont les turbines (6a, 7a) sont montées en parallèle, du fait qu'une première turbine (6a) d'un premier turbocompresseur à gaz d'échappement (6) est disposée dans la conduite de gaz d'échappement (4') du premier groupe de cylindres (3') et qu'une deuxième turbine (7a) d'un deuxième turbocompresseur à gaz d'échappement (7) est disposée dans la conduite de gaz d'échappement (4") du deuxième groupe de cylindres (3"), et dont les compresseurs (6b, 7b) sont montés en série, du fait qu'un premier compresseur (6b) du premier turbocompresseur à gaz d'échappement (6) est disposé dans une conduite d'aspiration globale (2), qui assure l'alimentation du moteur à combustion interne (1) en air frais ou en mélange frais, et qu'un deuxième compresseur (7b) du deuxième turbocompresseur à gaz d'échappement (7) est disposé en aval du premier compresseur (6b) dans cette conduite d'aspiration globale (2), dans lequel il est prévu une conduite de dérivation (15) pour contourner le premier compresseur (6b), laquelle débouche dans la conduite d'aspiration globale (2) en aval du premier compresseur (6b), **caractérisé en ce que** le premier compresseur (6b) du premier turbocompresseur à gaz d'échappement (6) est un compresseur axial (12) ou un compresseur à flux mixte (12).

2. Moteur à combustion interne suralimenté (1) selon la revendication 1, **caractérisé en ce que** le premier compresseur (6b) est un compresseur poly-étagé.

3. Moteur à combustion interne suralimenté (1) selon la revendication 1 ou 2, **caractérisé en ce que** la première turbine (6a) du premier turbocompresseur à gaz d'échappement (6) est une turbine axiale ou une turbine à flux mixte.

4. Moteur à combustion interne suralimenté (1) selon l'une quelconque des revendications précédentes, **caractérisé en ce qu'**il est prévu un élément d'arrêt (16) dans la conduite de dérivation (15).

5. Moteur à combustion interne suralimenté (1) selon l'une quelconque des revendications précédentes, **caractérisé en ce qu'**il est prévu un élément d'arrêt (14) dans la conduite d'aspiration globale (2), entre les deux compresseurs (6b, 7b) en amont de l'embouchure de la conduite de dérivation (15).

6. Moteur à combustion interne suralimenté (1) selon l'une quelconque des revendications précédentes, **caractérisé en ce qu'**il est prévu un retour de gaz d'échappement (8), qui comprend une conduite (9) qui est dérivée en amont d'une des deux turbines (6a, 7a) à partir de la conduite de gaz d'échappement (4', 4") associée à cette turbine (6a, 7a) et qui débouche dans la conduite d'aspiration globale (2).

7. Moteur à combustion interne suralimenté (1) selon l'une quelconque des revendications précédentes, **caractérisé en ce que** les conduites de gaz d'échappement (4', 4") des turbines (6a, 7a) se réunissent en une conduite de gaz d'échappement globale et il est prévu un retour de gaz d'échappement, qui comprend une conduite qui est dérivée de cette conduite de gaz d'échappement globale et qui débouche dans la conduite d'aspiration globale (2).

8. Moteur à combustion interne suralimenté (1) selon l'une quelconque des revendications précédentes, **caractérisé en ce que** la première turbine (6a) présente une géométrie de turbine variable.

9. Moteur à combustion interne suralimenté (1) selon l'une quelconque des revendications précédentes, **caractérisé en ce que** le premier compresseur (6b) présente une géométrie de compresseur fixe, non variable.

10. Moteur à combustion interne suralimenté (1) selon l'une quelconque des revendications précédentes, **caractérisé en ce qu'**un refroidisseur d'air de suralimentation (5) est disposé dans la conduite d'aspiration globale (2), en aval des compresseurs (6b, 7b).

11. Procédé de fonctionnement d'un moteur à combustion interne suralimenté (1) selon l'une quelconque des revendications 4 à 10, dans lequel, pour l'alimentation du moteur à combustion interne (1) en air frais

    • pour de faibles vitesses de rotation ou pour de petits débits d'air de suralimentation, on ouvre l'élément d'arrêt (16) prévu dans la conduite de dérivation (15), de telle manière que l'air frais soit fourni directement au deuxième compresseur (7b) avec contournement du premier compresseur (6b) par la conduite de dérivation (15), et
    • pour des vitesses de rotation plus élevées ou pour de plus grands débits d'air de suralimentation, on ferme l'élément d'arrêt (16) prévu dans la conduite de dérivation (15), de telle manière que l'air frais soit fourni d'abord au premier compresseur (6b) et ensuite au deuxième compresseur (7b).

12. Procédé selon la revendication 11 pour le fonctionnement d'un moteur à combustion interne suralimenté (1), dans lequel il est prévu un élément d'arrêt (14) dans la conduite d'aspiration globale (2), entre les deux compresseurs (6b, 7b), en amont de l'embouchure de la conduite de dérivation (15), dans lequel

    • pour de faibles vitesses de rotation ou de petits débits d'air de suralimentation, on ferme l'élément d'arrêt (14) prévu dans la conduite d'aspiration globale (2), et
    • pour des vitesses de rotation plus élevées ou de plus grands débits d'air de suralimentation,

**EP 2 058 486 B1**

on ouvre l'élément d'arrêt (14) prévu dans la conduite d'aspiration globale (2).

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1777387 A1